# EUROPEAN PATENT APPLICATION

(11) **EP 4 593 457 A1**
(43) Date of publication of application: **30.07.2025**
(21) Application number: 22959198.7
(22) Date of filing: 23.09.2022
(51) Int. Cl.: H04W 28/14

(54) **BUFFER STATUS REPORT REPORTING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Dehns Germany Partnerschaft mbB
(86) International application number: PCT/CN2022/120818
(87) International publication number: WO 2024/060191

(57) **Abstract**

A buffer status report reporting method and apparatus, and a communication device and a storage medium. A user equipment (UE) reports a buffer status report (BSR) for uplink data having an emergency scheduling requirement.

## Description

### TECHNICAL FIELD

The present disclosure relates to, but is not limited to, a field of communication technology, and more particularly relates to a method and an apparatus for reporting a buffer status report, a communication device, and a storage medium.

### BACKGROUND

In Extended Reality (XR) services, XR service data typically consists of multiple QoS flows, and the amount of service data is extremely large. During transmission, XR service flows need to meet certain latency requirements, especially since some data flows need to arrive at the server simultaneously for decoding. Any delay in one of the data flows may result in the failure of joint decoding for multiple data flows.

### SUMMARY

The embodiments of the present disclosure disclose a method and an apparatus for reporting a buffer status report, a communication device, and a storage medium.

According to a first aspect of the present disclosure, a method for reporting a buffer status report is provided, the method is performed by a user equipment UE and includes:
reporting the buffer status report BSR for uplink data with an urgent scheduling requirement.

In an embodiment, the reporting the BSR for the uplink data with the urgent scheduling requirement includes:
determining that a logical channel corresponding to the uplink data with the urgent scheduling requirement has a highest priority, and reporting the BSR based on a priority of the logical channel.

In an embodiment, the reporting the BSR for the uplink data with the urgent scheduling requirement includes:
triggering and reporting the BSR of a logical channel in response to the logical channel having the uplink data with the urgent scheduling requirement.

In an embodiment, the reporting the BSR for the uplink data with the urgent scheduling requirement includes:
triggering a first type BSR of a first logical channel in response to at least one logical channel having the uplink data with the urgent scheduling requirement, where a priority of the first type BSR is higher than a priority of a second type BSR, and the first logical channel is a logical channel with a highest priority among the at least one logical channel.

In an embodiment, the reporting the BSR for the uplink data with the urgent scheduling requirement includes:
determining that a logical channel has a first highest priority in response to the logical channel having the uplink data with the urgent scheduling requirement, and reporting the BSR based on the first highest priority, where the first highest priority is higher than a second highest priority.

In an embodiment, the uplink data includes: uplink data of an Extended Reality XR service.

In an embodiment, the uplink data with the urgent scheduling requirement includes uplink data of which a remaining data packet delay budget is less than a delay threshold.

In an embodiment, a configuration granularity of the delay threshold includes one of following:
a UE granularity;
a logical channel granularity; or
a logical channel group granularity.

In an embodiment, the uplink data with the urgent scheduling requirement is at a data packet granularity;
or
the uplink data with the urgent scheduling requirement is at a data packet set granularity.

In an embodiment, the method further includes:
determining that the uplink data has the urgent scheduling requirement according to a first indication information acquired from a Non-Access Stratum or an Application Layer.

In an embodiment, the reporting the BSR for the uplink data with the urgent scheduling requirement includes:
reporting the BSR for the uplink data with the urgent scheduling requirement according to an indication of second indication information sent by a base station.

In an embodiment, the second indication information includes a delay threshold associated with a remaining data packet delay budget of the uplink data.

In an embodiment, the reporting the BSR for the uplink data with the urgent scheduling requirement according to the indication of the second indication information sent by the base station includes one of following:
reporting the BSR for the uplink data with the urgent scheduling requirement of the UE according to the indication of the second indication information;
reporting the BSR for the uplink data with the urgent scheduling requirement of a predetermined logical channel according to the indication of the second indication information; or
reporting the BSR for the uplink data with the urgent scheduling requirement of a predetermined logical channel group according to the indication of the second indication information.

In an embodiment, the method further includes:
sending auxiliary information to a base station, where the auxiliary information is configurd to indicate that the UE is capable of reporting the BSR for the uplink data with the urgent scheduling requirement.

According to a second aspect of the present disclosure, a method for reporting a buffer status report is provided, the method is performed by a base station, and includes:
receiving the buffer status report BSR, where the BSR is sent by a user equipment UE for uplink data with an urgent scheduling requirement.

**In** an embodiment, a logical channel corresponding to the uplink data with the urgent scheduling requirement has a highest priority, and the BSR is reported by the UE based on a priority of the logical channel.

In an embodiment, the BSR is triggered and reported by the UE in response to a logical channel having the uplink data with the urgent scheduling requirement.

In an embodiment, the BSR reported includes: a first type BSR associated with a first logical channel;
where the first type BSR is triggered and reported by the UE in response to at least one logical channel having the uplink data with an urgent scheduling requirement and the first logical channel being a logical channel with a highest priority among the at least one logical channel, where a priority of the first type BSR is higher than a priority of a second type BSR.

In an embodiment,
the UE determines that a logical channel has a first highest priority in response to the logical channel having the uplink data with the urgent scheduling requirement, and the BSR is reported by the UE based on the first highest priority, where the first highest priority is higher than a second highest priority.

**In** an embodiment, the uplink data includes: uplink data of an Extended Reality XR service.

**In** an embodiment, the uplink data with the urgent scheduling requirement includes uplink data of which a remaining data packet delay budget is less than a delay threshold.

**In** an embodiment, a configuration granularity of the delay threshold includes one of following:
a UE granularity;
a logical channel granularity; or
a logical channel group granularity.

In an embodiment, the uplink data with the urgent scheduling requirement is at a data packet granularity;
or
the uplink data with the urgent scheduling requirement is at a data packet set granularity.

In an embodiment, the method further includes:
sending second indication information to the UE, where the second indication information is configured to indicate that the UE reports the BSR for the uplink data with the urgent scheduling requirement.

In an embodiment, the second indication information includes a delay threshold associated with a remaining data packet delay budget of the uplink data.

In an embodiment, the second indication information is configured to indicate one of following:
reporting the BSR for the uplink data with the urgent scheduling requirement of the UE;
reporting the BSR for the uplink data with the urgent scheduling requirement of a predetermined logical channel; or
reporting the BSR for the uplink data with the urgent scheduling requirement of a predetermined logical channel group.

In an embodiment, the sending the second indication information to the UE includes:
sending the second indication information to the UE in response to receiving auxiliary information sent by the UE, where the auxiliary information is configurd to indicate that the UE is capable of reporting the BSR for the uplink data with the urgent scheduling requirement.

According to a third aspect of the present disclosure, an apparatus for reporting a buffer status report is provided, the apparatus is arranged in a user equipment (UE), and includes:
a transceiver module, configured to report the buffer status report BSR for uplink data with an urgent scheduling requirement.

In an embodiment, the transceiver module is specifically configured to:
determine that a logical channel corresponding to the uplink data with the urgent scheduling requirement has a highest priority, and report the BSR based on a priority of the logical channel.

In an embodiment, the transceiver module is specifically configured to:
trigger and report the BSR of a logical channel in response to the logical channel having the uplink data with the urgent scheduling requirement.

In an embodiment, the transceiver module is specifically configured to:
trigger a first type BSR of a first logical channel in response to at least one logical channel having the uplink data with the urgent scheduling requirement, where a priority of the first type BSR is higher than a priority of a second type BSR, and the first logical channel is a logical channel with a highest priority among the at least one logical channel.

In an embodiment, the transceiver module is specifically configured to:
determine that a logical channel has a first highest priority in response to the logical channel having the uplink data with the urgent scheduling requirement, and report the BSR based on the first highest priority, where the first highest priority is higher than a second highest priority.

In an embodiment, the uplink data includes: uplink data of an Extended Reality XR service.

In an embodiment, the uplink data with the urgent scheduling requirement includes uplink data of which a remaining data packet delay budget is less than a delay threshold.

In an embodiment, a configuration granularity of the delay threshold includes one of the following:
a UE granularity;
a logical channel granularity; or
a logical channel group granularity.

In an embodiment, the uplink data with the urgent scheduling requirement is a data packet granularity;
or,
the uplink data with the urgent scheduling requirement is at a data packet set granularity.

In an embodiment, the apparatus further includes:
a processing module, configured to determine that the uplink data has the urgent scheduling requirement according to a first indication information acquired from a Non-Access Stratum or an Application Layer.

In an embodiment, the transceiver module is specifically configured to:
report the BSR for the uplink data with the urgent scheduling requirement according to an indication of second indication information sent by a base station.

In an embodiment, the second indication information includes a delay threshold associated with a remaining data packet delay budget of the uplink data.

In an embodiment, the transceiver module is specifically configured to one of the following:
report the BSR for the uplink data with the urgent scheduling requirement of the UE according to the indication of the second indication information;
report the BSR for the uplink data with the urgent scheduling requirement of a predetermined logical channel according to the indication of the second indication information; or
report the BSR for the uplink data with the urgent scheduling requirement of a predetermined logical channel group according to the indication of the second indication information.

In an embodiment, the transceiver module is further configured to:
send auxiliary information to a base station, wherein the auxiliary information is configurd to indicate that the UE is capable of reporting the BSR for the uplink data with the urgent scheduling requirement.

According to a fourth aspect of the present disclosure, an apparatus for reporting a buffer status report is provided, the apparatus is arranged in a base station and includes:
a transceiver module, configured to receive the buffer status report BSR, where the BSR is sent by a user equipment UE for uplink data with an urgent scheduling requirement.

In an embodiment, a logical channel corresponding to the uplink data with the urgent scheduling requirement has a highest priority, and the BSR is reported by the UE based on a priority of the logical channel.

In an embodiment, the BSR is triggered and reported by the UE in response to a logical channel having the uplink data with the urgent scheduling requirement.

In an embodiment, the reported BSR includes: a first type BSR associated with a first logical channel;
the first type BSR is triggered and reported by the UE in response to at least one logical channel having the uplink data with an urgent scheduling requirement and the first logical channel being a logical channel with a highest priority among the at least one logical channel, wherein a priority of the first type BSR is higher than a priority of a second type BSR

In an embodiment, the UE determines that a logical channel has a first highest priority in response to the logical channel having the uplink data with the urgent scheduling requirement, and the BSR is reported by the UE based on the first highest priority, where the first highest priority is higher than a second highest priority.

In an embodiment, the uplink data includes: uplink data of an Extended Reality XR service.

In an embodiment, the uplink data with the urgent scheduling requirement includes uplink data of which a remaining data packet delay budget is less than a delay threshold.

In an embodiment, a configuration granularity of the delay threshold includes one of the following:
a UE granularity;
a logical channel granularity; or
a logical channel group granularity.

In an embodiment, the uplink data with the urgent scheduling requirement is at a data packet granularity;
**or**
the uplink data with the urgent scheduling requirement is at a data packet set granularity.

In an embodiment, the transceiver module is further configured to:
send second indication information to the UE, where the second indication information is configured to indicate that the UE reports the BSR for the uplink data with the urgent scheduling requirement.

In an embodiment, the second indication information includes a delay threshold associated with a remaining data packet delay budget of the uplink data.

In an embodiment, the second indication information is configured to indicate one of the following:
report the BSR for the uplink data with the urgent scheduling requirement of the UE;
report the BSR for the uplink data with the urgent scheduling requirement of a predetermined logical channel; or
report the BSR for the uplink data with the urgent scheduling requirement of a predetermined logical channel group.

In an embodiment, the transceiver module is specifically configured to:
send the second indication information to the UE in response to receiving auxiliary information sent by the UE, where the auxiliary information is configurd to indicate that the UE is capable of reporting the BSR for the uplink data with the urgent scheduling requirement.

According to a fifth aspect of the present disclosure, a communication device is provided and includes:
a processor;
a memory for storing executable instructions of the processor;
where the processor is configured to, when executing the executable instructions, implement the method for reporting the buffer status report of the first aspect or the second aspect.

According to a sixth aspect of the present disclosure, a computer storage medium, where the computer storage medium stores a computer-executable program, and the executable program, when executed by a processor, implements the method for reporting the buffer status report of the first aspect or the second aspect.

In the embodiments of the present disclosure, UE reports the BSR for the uplink data with the urgent scheduling requirement. Thus, by reporting the BSR for the uplink data with the urgent scheduling requirement, the timely scheduling of the uplink data with the urgent scheduling requirement may be achieved, thereby meeting the communication service demand, reducing data transmission errors such as joint decoding failures, and improving communication reliability.

It should be understood that the above general description and the following detailed description are merely exemplary and explanatory and should not be construed as limiting the embodiments of the present disclosure.

### BRIEF DESCRIPTION OF THE DRAWINGS

FIG. 1 is a schematic diagram of a structure of a wireless communication system.
FIG. 2 is a flowchart of a method for reporting a buffer status report according to an exemplary embodiment.
FIG. 3 is a flowchart of a method for reporting a buffer status report according to an exemplary embodiment.
FIG. 4 is a flowchart of a method for reporting a buffer status report according to an exemplary embodiment.
FIG. 5 is a flowchart of a method for reporting a buffer status report according to an exemplary embodiment.
FIG. 6 is a flowchart of a method for reporting a buffer status report according to an exemplary embodiment.
FIG. 7 is a flowchart of a method for reporting a buffer status report according to an exemplary embodiment.
FIG. 8 is a flowchart of a method for reporting a buffer status report according to an exemplary embodiment.
FIG. 9 is a flowchart of a method for reporting a buffer status report according to an exemplary embodiment.
FIG. 10 is a flowchart of a method for reporting a buffer status report according to an exemplary embodiment.
FIG. 11 is a flowchart of a method for reporting a buffer status report according to an exemplary embodiment.
FIG. 12 is a block diagram of an apparatus for reporting a buffer status report according to an exemplary embodiment.
FIG. 13 is a block diagram of an apparatus for reporting a buffer status report according to an exemplary embodiment.
FIG. 14 is a block diagram of a UE according to an exemplary embodiment.
FIG. 15 is a block diagram of a base station according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are only for the purpose of describing specific embodiments, and are not intended to limit the present disclosure. The singular forms of "a" and "the" used in the embodiments of the present disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the present disclosure to describe various information, the information should not be limited to these terms. These terms are only used to distinguish the same type of information from each other. For example, without departing from the scope of the present disclosure, the first information may also be referred to as the second information, and similarly, the second information may also be referred to as the first information. Depending on the context, the term "if" as used herein may be interpreted as "when", "while" or "in response to determining".

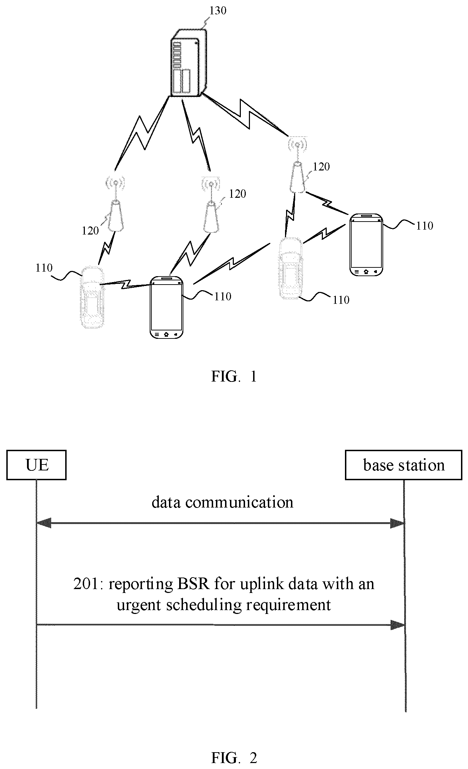

**FIG.** 1 illustrates a block diagram of a structure of a wireless communication system provided by an embodiment of the present disclosure. As illustrated in FIG. 1, the wireless communication system is a communication system based on cellular mobile communication technology. The wireless communication system may include: a plurality of user devices 110 and a plurality of base stations 120.

The user device 110 may refer to a device that provides voice and/or data connectivity to a user. The user device 110 may communicate with one or more core networks via a radio access network (RAN). The user device 110 may be an Internet of Things (IoT) user device, such as a sensor device, a cell phone (or "cellular" phone), and a computer with an IoT user device. For example, the user device 110 may be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a user equipment. Alternatively, the user device 110 may be an unmanned aerial vehicle device. Alternatively, the user device 110 may be an in-vehicle device, for example, an Electronic Control Unit (ECU) having wireless communication function, or a wireless user device connected to an external ECU. Alternatively, the user device 110 may also be a roadside device, for example, a street light, a signal light, or other roadside devices having wireless communication function.

The base station 120 may be a network side device in a wireless communication system. The wireless communication system may be the 4th generation (4G) mobile communication system, also known as long term evolution (LTE) system. Alternatively, the wireless communication system may also be a 5G system, also known as new radio (NR) system or 5G NR system. Alternatively, the wireless communication system may be a next-generation system of the 5G system. An access network in the 5G system may be called New Generation-Radio Access Network (NG-RAN).

The base station 120 may be an evolved base station (eNB) employed in the 4G system. Alternatively, the base station 120 may be a base station (gNB) adopting a centralized distributed architecture in the 5G system. When the base station 120 adopts the centralized distributed architecture, it usually includes a central unit (CU) and at least two distributed units (DUs). The centralized unit is equipped with protocol stacks of a data packet data convergence protocol (PDCP) layer, radio link control (RLC) layer, and a media access control (MAC) layer. The DU is equipped with a protocol stack of a physical (PHY) layer. The specific implementation of the base station 120 is not limited in this disclosure.

**A** wireless connection may be established between the base station 120 and the user device 110 via a wireless radio. In different implementations, the wireless radio is a wireless radio based on the 4G standard. Alternatively, the wireless radio is a wireless radio based on the 5G standard, such as a NR. Alternatively, the wireless radio may also be a wireless radio based on the next generation mobile communication network technology standard of the 5G standard.

**In** some embodiments, E2E (End to End) connections may also be established between the user devices 110, such as scenarios of vehicle to vehicle (V2V) communication, vehicle to infrastructure (V2I) communication, and vehicle to pedestrian (V2P) communication in vehicle to everything (V2X) communication.

The above user device may be considered as the terminal device of the following embodiments.

**In** some embodiments, the above wireless communication system may also include a network management device 130.

The plurality of base stations 120 are connected to the network management device 130 respectively. The network management device 130 may be a core network device in a wireless communication system. For example, the network management device 130 may be a mobility management entity (MME) in an evolved data packet core (EPC) network. Alternatively, the network management device may be other core network devices, such as a serving gate way (SGW), a public data network gate way (PGW), a policy and a charging rules function (PCRF), or a home subscriber server (HSS), etc. The implementation form of the network management device 130 is not limited in the embodiments of the present disclosure.

**To** facilitate the understanding of those skilled in the art, the embodiments of the present disclosure list multiple embodiments to clearly illustrate the technical solutions of embodiments of the present disclosure. Certainly, those skilled in the art may understand that the multiple embodiments provided in the embodiments of the present disclosure may be executed separately or in combination with the methods of other embodiments in the embodiments of the present disclosure, or the multiple embodiments may also be executed, alone or in combination, along with some methods in the related art, The embodiments of the present disclosure do not limit this.

The scheduling of data flows by the network is dynamic. In some cases, even if certain data flows belong to logical channels with a low priority level, if a data packet has not been scheduled for a long time, a BSR needs to be sent promptly to notify the network in order to meet the demand of XR service for multi-data flows. However, according to the existing mechanism, a BSR may only be sent when data arrives on a logical channel with high priority level, which cannot satisfy the urgent scheduling requirement.

Thus, how to schedule uplink data with an urgent scheduling requirement to meet communication service demands and reduce data transmission errors such as joint decoding failures remains an urgent issue to be addressed.

**As** shown in FIG. 2, the embodiments of the present disclosure provide a method for reporting a buffer status report, performed by a user equipment (UE), including:
**in** step 201: the BSR for uplink data with an urgent scheduling requirement is reported.

**In** a possible implementation, the uplink data with the urgent scheduling requirement may include at least one of the following: uplink data with a priority scheduling requirement and uplink data with a relatively high scheduling requirement.

The uplink data with the urgent scheduling requirement may also be uplink data that needs to be prioritized for scheduling or uplink data that the network or the terminal determines needs to be sent in a timely manner.

The uplink data with the urgent scheduling requirement may also be determined based on the service characteristics of specific data. For example, it may be determined based on the importance of the uplink data whether the uplink data has the urgent scheduling requirement. For instance, I-frame data is more important than P-frame data, so I-frame data may be determined to have an urgent scheduling requirement.

**In** a possible implementation, the uplink data with the urgent scheduling requirement may be uplink data of which time interval from the latest transmission deadline is less than a predetermined duration threshold.

For example, the uplink data with the urgent scheduling requirement may be one of multiple data flows involved in joint decoding. Since multiple data flows need to be jointly decoded, if one of the data flows fails to arrive before the predetermined decoding time, the decoding process may fail.

**In** a possible implementation, the uplink data with the urgent scheduling requirement may be determined based on at least one of the following:
**a** communication protocol provision;
**an** agreement between the UE and the network side, where the network side includes an access network device such as a base station and/or a core network device.

**In** the related art, the BSR may only be sent when data arrives on the logical channel with high priority level. Thus, if the logical channel having the uplink data with the urgent scheduling requirement does not have a high priority level, the BSR may not be sent, thereby failing to meet the requirement of the uplink data with the urgent scheduling requirement.

**In** this case, the BSR for the uplink data with the urgent scheduling requirement may be reported, which includes that when a logical channel has uplink data with the urgent scheduling requirement arriving, the UE may send the BSR to the base station. Here, the logical channel may have a high priority level or may not have a high priority level.

**In** a possible implementation, the BSR includes: a regular BSR, a padding BSR, and a retransmitted BSR.

Thus, by reporting the BSR for the uplink data with the urgent scheduling requirement, the timely scheduling of the uplink data with the urgent scheduling requirement may be achieved, thereby meeting the communication service demand, reducing data transmission errors such as joint decoding failures, and improving communication reliability.

**In** an embodiment, the uplink data includes uplink data of an Extended Reality (XR) service.

Typically, XR service data consists of multiple QoS flows, and the amount of service data is extremely large. XR service flows need to meet certain latency requirements during transmission, especially since some data flows need to arrive at the server within a predetermined time range for decoding. Any delay in one of the data flows may result in the failure of joint decoding for multiple data flows. Thus, the UE may send the BSR for the XR service uplink data with an urgent scheduling requirement, enabling timely scheduling, meeting the requirement of theXR service, and reducing data transmission errors such as joint decoding failures.

**In** an embodiment, the uplink data with the urgent scheduling requirement includes uplink data of which a remaining data packet delay budget is less than a delay threshold.

The uplink data may have a data packet delay budget, i.e., transmission within the data packet delay budget may meet the transmission time requirement of the uplink data. The remaining data packet delay budget may be a time difference between a current time and an end time of the data packet delay budget. The remaining data packet delay budget is the remaining duration in which the uplink data may be correctly transmitted and/or decoded.

**When** the remaining data packet delay budget of the uplink data is less than a delay threshold, the UE may send the BSR for the uplink data to enable timely scheduling and meet the service requirement.

For example, when the remaining data packet delay budget (the time left until exceeding the PDB) is less than a certain delay threshold (e.g., the remaining data packet delay budget of the data packet is determined to be less than 10ms; the delay threshold may be specified by a protocol agreement or acquired from a network notification. A configuration granularity of the data packet delay budget (PDB) may be configured at a granularity that is either for a single data packet or for a data packet set).

The UE may estimate which data packet has a PDB that is about to expire and has not yet been scheduled, and thus need to be prioritized for scheduling. The uplink data with a relatively high urgent scheduling requirement may be statistically analyzed based on statistical analysis at the data packet level or at the data packet set level.

**In** an embodiment, the configuration granularity of the delay threshold includes one of the following:
**a** UE granularity;
**a** logical channel granularity;
**a** logical channel group granularity.

**In** a possible implementation, the delay threshold may be agreed upon by a communication protocol or may be indicated to the UE by a network-side device such as a base station.

The delay threshold at the UE granularity may refer to that the delay threshold applies to all uplink data of the UE to determine whether the uplink data has an urgent scheduling requirement.

The delay threshold at the logical channel granularity may refer to that the delay threshold applies to uplink data transmitted within the logical channel to determine whether the uplink data has an urgent scheduling requirement.

**The** delay threshold at the logical channel group granularity may refer to that the delay threshold applies to uplink data transmitted within the logical channel group to determine whether the uplink data has an urgent scheduling requirement.

**In** an embodiment, the uplink data with the urgent scheduling requirement is at a data packet granularity;
**or**
the uplink data with the urgent scheduling requirement is at a data packet set granularity.

**The** uplink data may be statistically analyzed based on data packet or data packet set, and may be determined whether the uplink data is the uplink data with the urgent scheduling requirement. The statistical analysis is performed based on the data packet or data packet set, which may improve flexibility of the statistics, thereby meeting the requirement of different forms of uplink data transmission.

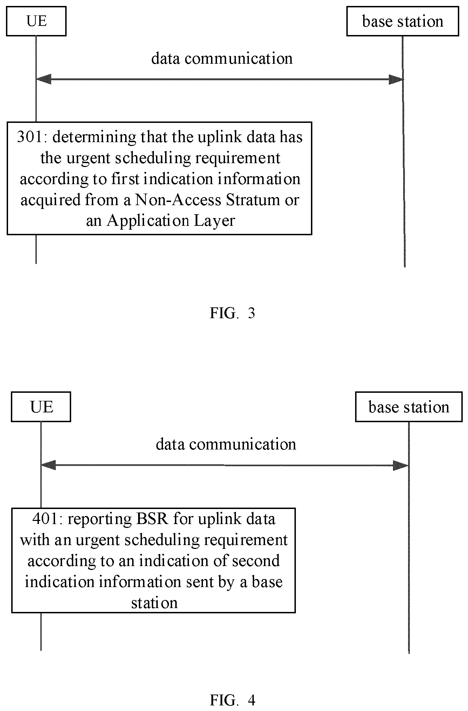

**As** shown in FIG. 3, the embodiments of the present disclosure provide a method for reporting a buffer status report, performed by a user equipment (UE), including:
**in** step 301: it is determined that the uplink data has the urgent scheduling requirement according to first indication information acquired from a Non-Access Stratum or an Application Layer.

**In** a possible embodiment, the uplink data with the urgent scheduling requirement is indicated by the first indication information. The first indication information may be sent to the UE by a network device such as a core network through the Non-Access Stratum or the application layer.

For example, the uplink data with the urgent scheduling requirement indicated by the first indication information may be at a data packet granularity or a data packet set granularity.

**As** shown in FIG. 4, the embodiments of the present disclosure provide a method for reporting a buffer status report, performed by a UE, including:
**in** step 401: the BSR for the uplink data with the urgent scheduling requirement is reported according to an indication of second indication information sent by a base station.

**The** base station notifies the UE through the second indication information to enable reporting the BSR for the uplink data with the urgent scheduling requirement.

**In** a possible implementation, the second indication information may be carried in a dedicated signaling such as an RRC and/or a DCI and sent to the UE.

**In** an embodiment, the reporting the BSR for the uplink data with the urgent scheduling requirement according to the indication of the second indication information includes one of the following:
reporting the BSR for the uplink data with the urgent scheduling requirement of the UE according to the indication of the second indication information;
reporting the BSR for the uplink data with the urgent scheduling requirement of a predetermined logical channel according to the indication of the second indication information; or
reporting the BSR for the uplink data with the urgent scheduling requirement of a predetermined logical channel group according to the indication of the second indication information.

The second indication information may indicate that the reporting of the BSR for the uplink data with the urgent scheduling requirement is performed at one of the following granularities: a UE granularity, a logical channel granularity, or a logical channel group granularity.

Specifically, when the second indication information corresponds to the UE granularity, the UE reports the BSR for the uplink data with the urgent scheduling requirement of the UE.

For example, if the base station is aware that the UE is an XR service UE, the second indication information corresponds to the UE granularity.

Specifically, when the second indication information corresponds to the logical channel group granularity, the UE reports the BSR for the uplink data with the urgent scheduling requirement of a specified logical channel group.

For example, if the base station is aware that the UE is an XR service UE, the base station may notify the UE to enable reporting the BSR for the uplink data with the urgent scheduling requirement for a specific logical channel group.

Specifically, when the second indication information corresponds to the logical channel granularity, the UE reports the BSR for the uplink data with the urgent scheduling requirement of a specific logical channel.

**In** a possible implementation, the second indication information may indicate enabling reporting of the BSR for the uplink data with the urgent scheduling requirement at least one of the following: a UE, a logical channel, or a logical channel group.

For example, if the base station is aware that the UE is an XR service UE, the second indication information may notify the UE to enable reporting the BSR for the uplink data with the urgent scheduling requirement for a specific logical channel.

**In** an embodiment, the second indication information includes a delay threshold associated with a remaining data packet delay budget of the uplink data.

**In** a possible implementation, the second indication information may explicitly indicate that the UE reports the BSR for the uplink data with the urgent scheduling requirement of a specific logical channel group.

In a possible implementation, the second indication information may implicitly indicate that the UE reports the BSR for the uplink data with the urgent scheduling requirement of a specific logical channel group.

**In** a possible implementation, the second indication information indicates a delay threshold associated with the remaining data packet delay budget of the uplink data to implicitly indicate that the UE reports the BSR for the uplink data with the urgent scheduling requirement of a specific logical channel group.

**A** granularity of the delay threshold indicated by the second indication information may include one of the following: a UE granularity, a logical channel granularity, or a logical channel group granularity.

For example, if the network notifies a delay threshold for a specific logical channel, it means enabling the function of reporting the BSR for the uplink data with the urgent scheduling requirement.

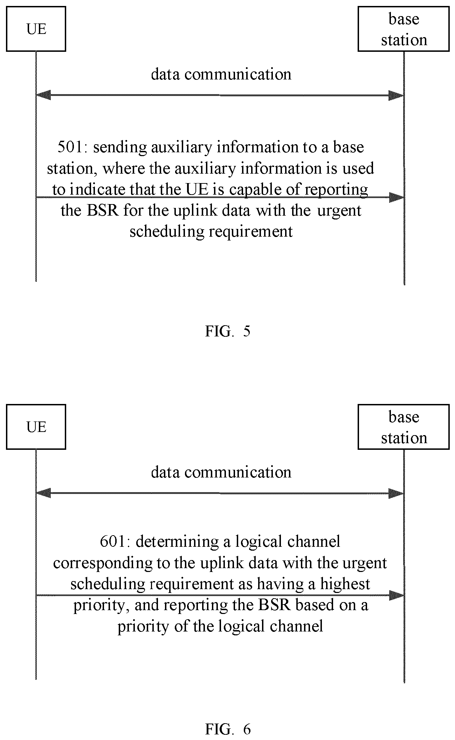

**As** shown in FIG. 5, the embodiments of the present disclosure provide a method for reporting a buffer status report, performed by a UE, including:
step 501: auxiliary information is sent to a base station, where the auxiliary information is used to indicate that the UE is capable of reporting the BSR for the uplink data with the urgent scheduling requirement.

**In** a possible implementation, the auxiliary information of the UE includes whether the UE supports the capability of reporting the BSR for the uplink data with the urgent scheduling requirement.

**In** a possible implementation, the auxiliary information of the UE includes whether the UE desires to use the function of reporting the BSR for the uplink data with the urgent scheduling requirement.

**As** shown in FIG. 6, the embodiments of the present disclosure provide a method for reporting a buffer status report, performed by a UE, including:
**step** 601: a logical channel corresponding to the uplink data with the urgent scheduling requirement is determined as having a highest priority, and the BSR is reported based on a priority of the logical channel.

Here, the logical channel corresponding to the uplink data with the urgent scheduling requirement may be set to the highest priority. Thus, the UE may prioritize triggering the reporting of the BSR of the logical channel based on the priority of the logical channel, thereby ensuring timely scheduling, meeting communication service demands, and reducing data transmission errors such as joint decoding failures.

For example, the highest priority of the logical channel may be set as "1", if the logical channel includes the uplink data with the urgent scheduling requirement, the priority of the logical channel may be determined as "1". The logical channel may have the same transmission priority as other logical channels with priority "1".

For example, when a regular BSR is triggered, the priority level of this type of the logical channel needs to be considered as the highest priority level. (For example, if LCH1 has data to be transmitted and LCH2 has newly arrived data, even if the LCH2 has a lower logical channel priority level, since the LCH2 has data with an urgent scheduling requirement, the priority level of the LCH2 is higher than that of the LCH1, and the regular BSR may be triggered for the LCH2). This ensures that the logical channel of data with the urgent scheduling requirement may trigger the BSR in a timely manner.

For example, when a padding BSR is reported, if a short truncated BSR needs to be reported, the priority level of this type of the logical channel needs to be considered as the highest priority level of the logical channel. (For example, if LCH1 has data to be transmitted and LCH2 has data to be transmitted, even if the LCH2 has a lower logical channel priority level, since data with an urgent scheduling requirement has arrived, its priority level is higher than that of the LCH1. In this case, since the short truncated BSR may only carry one LCG, the short truncated BSR carries the LCG ID that triggers the LCH2.)

For example, when a BSR retransmission timer times out, the logical channel of data with a relatively high urgent scheduling requirement needs to be set as the highest priority level. (For example, if LCH1 triggers the reporting of a BSR, when the retransmission timer times out, LCH1 is considered the logical channel with the highest priority, even if LCH2 has a lower logical channel priority level, since the data with an urgent scheduling requirement has arrived, LCH2 is considered as the highest priority level.)

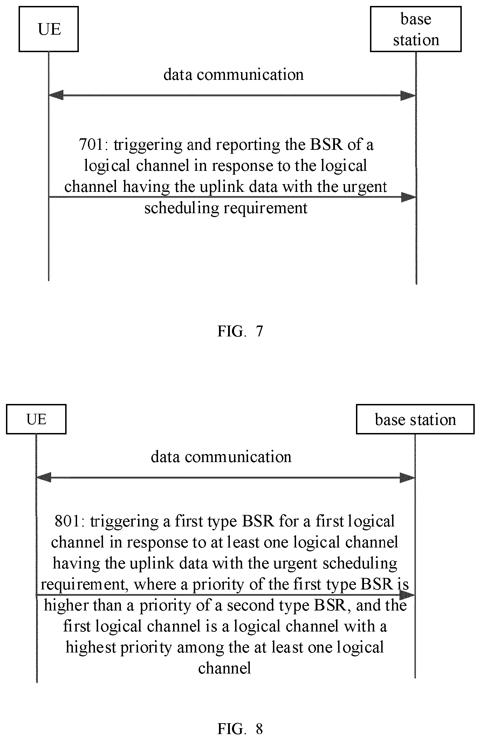

As shown in FIG. 7, the embodiments of the present disclosure provide a method for reporting a buffer status report, performed by a UE, including:
step 701: the BSR of a logical channel is triggered and reported in response to the logical channel having the uplink data with the urgent scheduling requirement.

Here, the BSR of the logical channel may be triggered by the uplink data with the urgent scheduling requirement.

For example, when the uplink data with the urgent scheduling requirement arrives at the logical channel, the UE triggers the BSR associated with the logical channel to schedule the arrived uplink data with the urgent scheduling requirement.

For example, the BSR should be triggered if any of the following events occurs in an activated cell group:
uplink data of a logical channel belonging to a logical channel group (LCG) is available to a MAC entity; and
1. the uplink data belongs to a logical channel of which priority is higher than a priority of any logical channel that has uplink data in the logical channel group; or
2.all logical channels belonging to the logical channel group do not include any available uplink data; or
3.available data arriving at a logical channel belonging to the logical channel group becomes data with an urgent scheduling requirement, i.e., data that needs to be scheduled as soon as possible or has a stringent delay budget.

Here, the BSR may be a regular BSR.

For example, a conventional triggering condition for the regular BSR in the related art is modified, and one triggering condition is added: the BSR is triggered when the logical channel has the urgent scheduling data requirement. That is, the presence of data with the urgent scheduling requirement triggers the BSR.

For example, a conventional triggering condition for the regular BSR in the related art is modified, and one triggering condition is added: the BSR is triggered when the data with the urgent scheduling requirement in the logical channel changes from absent to present. Compared with the previous embodiment, this approach may avoid frequent triggering of the BSR.

**As** shown in FIG. 8, the embodiments of the present disclosure provide a method for reporting a buffer status report, performed by a UE, including:
step 801: a first type BSR for a first logical channel is triggered in response to at least one logical channel having the uplink data with the urgent scheduling requirement, where a priority of the first type BSR is higher than a priority of a second type BSR, and the first logical channel is a logical channel with a highest priority among the at least one logical channel.

The first type BSR is different from the second type BSR.

Here, the second type BSR may be a BSR used in the related art, in the related art, the BSRs may have different priorities. The first type BSR in the embodiments of the present disclosure has a priority higher than any priority of the BSR used in the related art. For example, the second type BSR may be a BSR used when the logical channel has the highest priority, whereas the first type BSR in the embodiments of the present disclosure has a priority higher than such a highest priority. The first type BSR may be a BSR of a logical channel for the uplink data with the urgent scheduling requirement.

**In** a possible implementation, logical channels or logical channel groups of the uplink data with the urgent scheduling requirement may be prioritized, and the first type BSR is reported for the logical channel or logical channel group with a high priority.

**In** a possible implementation, a priority of the first type BSR is higher than a priority of the second type BSR.

The first type BSR may be an XR-BSR, also referred to as a priority BSR, which is used for prioritized transmission of the logical channel or logical channel group having the data with a relatively high urgent scheduling requirement.

**In** a possible implementation, if the UE determines that there is data with a relatively high urgent scheduling requirement, the logical channels or logical channel groups to which such logical channel belongs are prioritized to form a priority BSR. If the grant is limited, i.e., insufficient to transmit all sorted LCGs, the priority BSR may transmit as many sorted LCGs as possible.

For example,
1> if a delay threshold (PdbThres) for a remaining data packet delay budget is configured, and the remaining data packet delay budget of the uplink data included in any logical channel of an LCG is less than PdbThres, then,
**2>** the priority of the LCG is increased, i.e., the LCG that is about to reach the scheduling budget threshold is prioritized.
**2>** if the UL grant cannot accommodate an SL-BSR MAC CE containing the buffer status only for all prioritized LCGs,
**an** XR-BSR is reported, where the XR-BSR contains the buffer status for as many prioritized LCGs having data available for transmission as possible, taking the number of bits in the UL grant into consideration (i.e., the new BSR carries the prioritized LCG).

Prioritized BSR,when logical channels are priorized f: the priority level for an XR-BSR type BRS or a priority BSR may be defined before the MAC CE for (Extended) BSR. For example, the logical channels should be prioritized according to the following order (with the highest priority listed first):
MAC CE for C-RNTI or data from UL-CCCH;
MAC CE for (Enhanced) BFR, or MAC CE for Configured Grant Confirmation, or MAC CE for Multiple Entry Configured Grant Confirmation;
MAC CE for Sidelink Configured Grant Confirmation;
MAC CE for LBT failure;
MAC CE for Timing Advance Report;
MAC CE for XR-BSR;
MAC CE for SL-BSR prioritized according to clause 5.22.1.6;
MAC CE for (Extended) BSR, with exception of BSR included for padding;
MAC CE for (Enhanced) Single Entry PHR, or MAC CE for (Enhanced) Multiple Entry PHR;
MAC CE for Positioning Measurement Gap Activation/Deactivation Request;
MAC CE for the number de of Desired Guard Symbols;
MAC CE for Case-6 Timing Request;
MAC CE for (Extended) Pre-emptive BSR;
MAC CE for SL-BSR, with exception of SL-BSR prioritized according to clause 5.22.1.6 and SL-BSR included for padding;
MAC CE for IAB-MT Recommended Beam Indication, or MAC CE for Desired IAB-MT PSD range, or MAC CE for Desired DL Tx Power Adjustment;
data from any Logical Channel, except data from UL-CCCH;
MAC CE for Recommended bit rate query;
MAC CE for BSR included for padding;
MAC CE for SL-BSR included for padding.

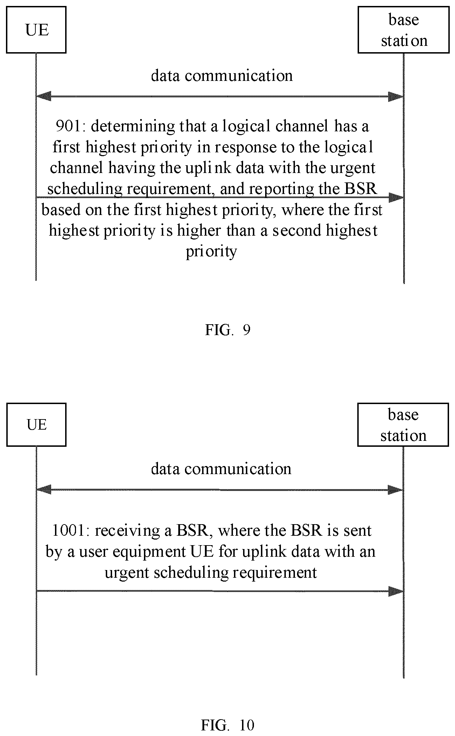

As shown in FIG. 9, the embodiments of the present disclosure provide a method for reporting a buffer status report, performed by a user equipment (UE), including:
step 901: it is determined that a logical channel has a first highest priority in response to the logical channel having the uplink data with the urgent scheduling requirement, and the BSR is reported based on the first highest priority, where the first highest priority is higher than a second highest priority.

Here, the second highest priority may be the highest priority of logical channels in the related art. In the related art, logical channels may be categorized into different priority levels, and the second highest priority may be the highest priority among all priority levels in the related art. Meanwhile, the first highest priority in the embodiments of the present disclosure is higher than the highest priority in the related art (i.e., the second highest priority). In this case, the logical channel having the uplink data with the urgent scheduling requirement may be determined as having the first highest priority. The UE may report the BSR based on the priority level.

Since the first highest priority is higher than the second highest priority, the logical channel having the uplink data with the urgent scheduling requirement has a higher priority level for reporting the BSR, thereby enabling timely scheduling of the uplink data with the urgent scheduling requirement and meeting the data transmission requirement.

For example, a super priority (i.e., the first highest priority) may be introduced for logical channels having the uplink data with the urgent scheduling requirement, which is higher than the highest priority (i.e., the second highest priority). The UE determines that the logical channel having the uplink data with the urgent scheduling requirement is at a level higher than that of high-priority logical channels.

For example, when a regular BSR is triggered, if the data with a relatively high urgent scheduling requirement arrives at a certain logical channel, the priority level of the logical channel of this type of data is higher than that of any logical channel in any LCG. In this case, a regular BSR is triggered for the LCG corresponding to the logical channel. Thus, if the uplink data with the relatively high urgent scheduling requirement arrives at a certain logical channel, a regular BSR may be triggered.

For example, when a padding BSR is to be reported in a truncated manner, the UE determines that if there is the data with the relatively high urgent scheduling requirement, the LCG ID for the logical channel is carried in a short truncated BSR for reporting (because the logical channel is at a super high priority level); for a long truncated BSR, since multiple LCG information may be carried, the LCG ID of the logical channel that has the uplink data with the relatively high urgent scheduling requirement is placed at the front. Thus, for a certain logical channel, if a logical channel has the uplink data with a relatively high urgent scheduling requirement arrived and the grant is insufficient, requiring the reporting of the truncated BSR, the prioritized reporting of the LCG corresponding to the logical channel may be triggered.

For example, when a BSR retransmission timer times out, the UE prioritizes the transmission of the retransmission BSR scenario triggered by the data with the relatively high urgent scheduling requirement (because the logical channel is at a super high priority level). For instance, if both LCH1 and LCG2 trigger a BSR retransmission report, both LCH1 and LCG2 are considered the highest-priority logical channels, but since LCH2 has the uplink data with the urgent scheduling requirement that triggers a BSR retransmission, the BSR carrying the LCG of LCH2 is also prioritized for reporting. Thus, for a certain logical channel, if data with a relatively high urgent scheduling requirement triggers a BSR retransmission, the prioritized reporting of the LCG corresponding to the logical channel may be triggered.

As shown in FIG. 10, the embodiments of the present disclosure provide a method for reporting a buffer status report, performed by a base station, including:
**step** 1001: a BSR is received, where the BSR is sent by a user equipment (UE) for uplink data with an urgent scheduling requirement.

In a possible implementation, the uplink data with the urgent scheduling requirement may include at least one of the following: uplink data with a priority scheduling requirement and uplink data with a relatively high scheduling requirement.

The uplink data with the urgent scheduling requirement may also be uplink data that needs to be prioritized for scheduling or uplink data that the network or the terminal determines needs to be sent in a timely manner.

The uplink data with the urgent scheduling requirement may also be determined based on the service characteristics of specific data. For example, it may be determined based on the importance of the uplink data whether the uplink data has the urgent scheduling requirement. For instance, I-frame data is more important than P-frame data, so I-frame data may be determined to have an urgent scheduling requirement.

**In** a possible implementation, the uplink data with the urgent scheduling requirement may be uplink data of which time interval from the latest transmission deadline is less than a predetermined duration threshold.

For example, the uplink data with the urgent scheduling requirement may be one of multiple data flows involved in joint decoding. Since multiple data flows need to be jointly decoded, if one of the data flows fails to arrive before the predetermined decoding time, the decoding process may fail.

**In** a possible implementation, the uplink data with the urgent scheduling requirement may be determined based on at least one of the following:
**a** communication protocol provision;
**an** agreement between the UE and the network side, where the network side includes an access network device such as a base station and/or a core network device.

**In** the related art, the BSR may only be sent when data arrives on the logical channel with high priority level. Thus, if the logical channel having the uplink data with the urgent scheduling requirement does not have a high priority level, the BSR may not be sent, thereby failing to meet the requirement of the uplink data with the urgent scheduling requirement.

**In** this case, the BSR for the uplink data with the urgent scheduling requirement may be reported, which includes that when a logical channel has uplink data with the urgent scheduling requirement arriving, the UE may send the BSR to the base station. Here, the logical channel may have a high priority level or may not have a high priority level.

**In** a possible implementation, the BSR includes: a regular BSR, a padding BSR, and a retransmitted BSR.

Thus, by reporting the BSR for the uplink data with the urgent scheduling requirement, the timely scheduling of the uplink data with the urgent scheduling requirement may be achieved, thereby meeting the communication service demand, reducing data transmission errors such as joint decoding failures, and improving communication reliability.

**In** an embodiment, the uplink data includes uplink data of an Extended Reality (XR) service.

Typically, XR service data consists of multiple QoS flows, and the amount of service data is extremely large. XR service flows need to meet certain latency requirements during transmission, especially since some data flows need to arrive at the server within a predetermined time range for decoding. Any delay in one of the data flows may result in the failure of joint decoding for multiple data flows. Thus, the UE may send the BSR for the XR service uplink data with an urgent scheduling requirement, enabling timely scheduling, meeting the requirement of theXR service, and reducing data transmission errors such as joint decoding failures.

**In** an embodiment, the uplink data with the urgent scheduling requirement includes uplink data of which a remaining data packet delay budget is less than a delay threshold.

**The** uplink data may have a data packet delay budget, i.e., transmission within the data packet delay budget may meet the transmission time requirement of the uplink data. The remaining data packet delay budget may be a time difference between a current time and an end time of the data packet delay budget. The remaining data packet delay budget is the remaining duration in which the uplink data may be correctly transmitted and/or decoded.

When the remaining data packet delay budget of the uplink data is less than a delay threshold, the UE may send the BSR for the uplink data to enable timely scheduling and meet the service requirement.

For example, when the remaining data packet delay budget (the time left until exceeding the PDB) is less than a certain delay threshold (e.g., the remaining data packet delay budget of the data packet is determined to be less than 10ms; the delay threshold may be specified by a protocol agreement or acquired from a network notification. A configuration granularity of the data packet delay budget (PDB) may be configured at a granularity that is either for a single data packet or for a data packet set).

The UE may estimate which data packet has a PDB that is about to expire and has not yet been scheduled, and thus need to be prioritized for scheduling. The uplink data with a relatively high urgent scheduling requirement may be statistically analyzed based on statistical analysis at the data packet level or at the data packet set level.

**In** an embodiment, the configuration granularity of the delay threshold includes one of the following:
a UE granularity;
**a** logical channel granularity;
**a** logical channel group granularity.

**In** a possible implementation, the delay threshold may be agreed upon by a communication protocol or may be indicated to the UE by a network-side device such as a base station.

The delay threshold at the UE granularity may refer to that the delay threshold applies to all uplink data of the UE to determine whether the uplink data has an urgent scheduling requirement.

The delay threshold at the logical channel granularity may refer to that the delay threshold applies to uplink data transmitted within the logical channel to determine whether the uplink data has an urgent scheduling requirement.

The delay threshold at the logical channel group granularity may refer to that the delay threshold applies to uplink data transmitted within the logical channel group to determine whether the uplink data has an urgent scheduling requirement.

**In** an embodiment, the uplink data with the urgent scheduling requirement is at a data packet granularity;
**or**
the uplink data with the urgent scheduling requirement is at a data packet set granularity.

The uplink data may be statistically analyzed based on data packet or data packet set, and may be determined whether the uplink data is the uplink data with the urgent scheduling requirement. The statistical analysis is performed based on the data packet or data packet set, which may improve flexibility of the statistics, thereby meeting the requirement of different forms of uplink data transmission.

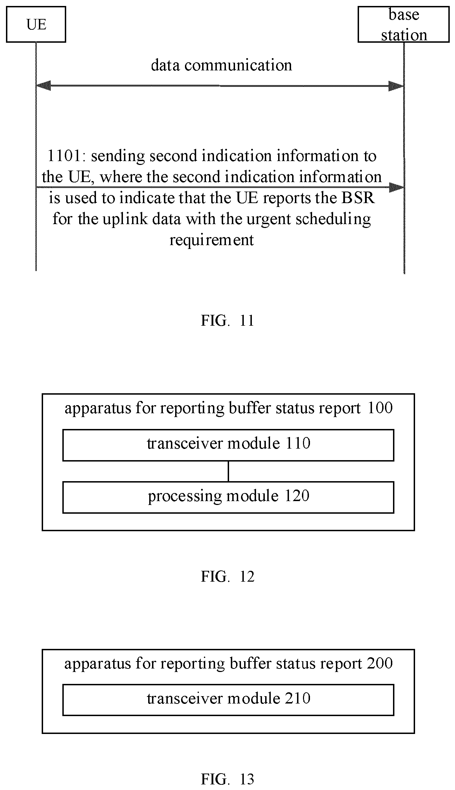

**As** shown in FIG. 11, the embodiments of the present disclosure provide a method for reporting a buffer status report, performed by a base station, including:
**in** step 1101: second indication information is sent to the UE, where the second indication information is used to indicate that the UE reports the BSR for the uplink data with the urgent scheduling requirement.

**The** base station notifies the UE through the second indication information to enable reporting the BSR for the uplink data with the urgent scheduling requirement.

**In** a possible implementation, the second indication information may be carried in a dedicated signaling such as an RRC and/or a DCI and sent to the UE.

**In** an embodiment, the second indication information is configured to indicate one of following:
reporting the BSR for the uplink data with the urgent scheduling requirement of the UE;
reporting the BSR for the uplink data with the urgent scheduling requirement of a predetermined logical channel; or
reporting the BSR for the uplink data with the urgent scheduling requirement of a predetermined logical channel group.

**The** second indication information may indicate that the reporting of the BSR for the uplink data with the urgent scheduling requirement is performed at one of the following granularities: a UE granularity, a logical channel granularity, or a logical channel group granularity.

Specifically, when the second indication information corresponds to the UE granularity, the UE reports the BSR for the uplink data with the urgent scheduling requirement of the UE.

For example, if the base station is aware that the UE is an XR service UE, the second indication information corresponds to the UE granularity.

Specifically, when the second indication information corresponds to the logical channel group granularity, the UE reports the BSR for the uplink data with the urgent scheduling requirement of a specified logical channel group.

For example, if the base station is aware that the UE is an XR service UE, the base station may notify the UE to enable reporting the BSR for the uplink data with the urgent scheduling requirement for a specific logical channel group.

Specifically, when the second indication information corresponds to the logical channel granularity, the UE reports the BSR for the uplink data with the urgent scheduling requirement of a specific logical channel.

**In** a possible implementation, the second indication information may indicate enabling reporting of the BSR for the uplink data with the urgent scheduling requirement at least one of the following: a UE, a logical channel, or a logical channel group.

For example, if the base station is aware that the UE is an XR service UE, the second indication information may notify the UE to enable reporting the BSR for the uplink data with the urgent scheduling requirement for a specific logical channel.

**In** an embodiment, the second indication information includes a delay threshold associated with a remaining data packet delay budget of the uplink data.

**In** a possible implementation, the second indication information may explicitly indicate that the UE reports the BSR for the uplink data with the urgent scheduling requirement of a specific logical channel group.

**In** a possible implementation, the second indication information may implicitly indicate that the UE reports the BSR for the uplink data with the urgent scheduling requirement of a specific logical channel group.

**In** a possible implementation, the second indication information indicates a delay threshold associated with the remaining data packet delay budget of the uplink data to implicitly indicate that the UE reports the BSR for the uplink data with the urgent scheduling requirement of a specific logical channel group.

**A** granularity of the delay threshold indicated by the second indication information may include one of the following: a UE granularity, a logical channel granularity, or a logical channel group granularity.

For example, if the network notifies a delay threshold for a specific logical channel, it means enabling the function of reporting the BSR for the uplink data with the urgent scheduling requirement.

**In** an embodiment, the sending the second indication information to the UE includes:
sending the second indication information to the UE in response to receiving auxiliary information sent by the UE, where the auxiliary information is configurd to indicate that the UE is capable of reporting the BSR for the uplink data with the urgent scheduling requirement.

**In** a possible implementation, the auxiliary information of the UE includes whether the UE supports the capability of reporting the BSR for the uplink data with the urgent scheduling requirement.

**In** a possible implementation, the auxiliary information of the UE includes whether the UE desires to use the function of reporting the BSR for the uplink data with the urgent scheduling requirement.

After the base station determines the capability of the UE to report the BSR for the uplink data with the urgent scheduling requirement and/or determines that the UE desires to use the function of reporting the BSR for the uplink data with the urgent scheduling requirement, the base station may send the second indication information to the UE.

In an embodiment, the UE determines a logical channel corresponding to the uplink data with the urgent scheduling requirement as having the highest priority, and the BSR is reported by the UE based on the priority of the logical channel.

Here, the logical channel corresponding to the uplink data with the urgent scheduling requirement may be set to the highest priority. Thus, the UE may prioritize triggering the reporting of the BSR of the logical channel based on the priority of the logical channel, thereby ensuring timely scheduling, meeting communication service demands, and reducing data transmission errors such as joint decoding failures.

For example, the highest priority of the logical channel may be set as "1", if the logical channel includes the uplink data with the urgent scheduling requirement, the priority of the logical channel may be determined as "1". The logical channel may have the same transmission priority as other logical channels with priority "1".

For example, when a regular BSR is triggered, the priority level of this type of the logical channel needs to be considered as the highest priority level. (For example, if LCH1 has data to be transmitted and LCH2 has newly arrived data, even if the LCH2 has a lower logical channel priority level, since the LCH2 has data with an urgent scheduling requirement, the priority level of the LCH2 is higher than that of the LCH1, and the regular BSR may be triggered for the LCH2). This ensures that the logical channel of data with the urgent scheduling requirement may trigger the BSR in a timely manner.

For example, when a padding BSR is reported, if a short truncated BSR needs to be reported, the priority level of this type of the logical channel needs to be considered as the highest priority level of the logical channel. (For example, if LCH1 has data to be transmitted and LCH2 has data to be transmitted, even if the LCH2 has a lower logical channel priority level, since data with an urgent scheduling requirement has arrived, its priority level is higher than that of the LCH1. In this case, since the short truncated BSR may only carry one LCG, the short truncated BSR carries the LCG ID that triggers the LCH2.)

For example, when a BSR retransmission timer times out, the logical channel of data with a relatively high urgent scheduling requirement needs to be set as the highest priority level. (For example, if LCH1 triggers the reporting of a BSR, when the retransmission timer times out, LCH1 is considered the logical channel with the highest priority, even if LCH2 has a lower logical channel priority level, since the data with an urgent scheduling requirement has arrived, LCH2 is considered as the highest priority level.)

In an embodiment, the BSR is triggered and reported by the UE in response to a logical channel having the uplink data with the urgent scheduling requirement

Here, the BSR of the logical channel may be triggered by the uplink data with the urgent scheduling requirement.

For example, when the uplink data with the urgent scheduling requirement arrives at the logical channel, the UE triggers the BSR associated with the logical channel to schedule the arrived uplink data with the urgent scheduling requirement.

For example, the BSR should be triggered if any of the following events occurs in an activated cell group:
uplink data of a logical channel belonging to a logical channel group (LCG) is available to a MAC entity; and
the uplink data belongs to a logical channel of which priority is higher than a priority of any logical channel that has uplink data in the logical channel group; or
all logical channels belonging to the logical channel group do not include any available uplink data; or
available data arriving at a logical channel belonging to the logical channel group becomes data with an urgent scheduling requirement, i.e., data that needs to be scheduled as soon as possible or has a stringent delay budget.

Here, the BSR may be a regular BSR.

For example, a conventional triggering condition for the regular BSR in the related art is modified, and one triggering condition is added: the BSR is triggered when the logical channel has the urgent scheduling data requirement. That is, the presence of data with the urgent scheduling requirement triggers the BSR.

For example, a conventional triggering condition for the regular BSR in the related art is modified, and one triggering condition is added: the BSR is triggered when the data with the urgent scheduling requirement in the logical channel changes from absent to present. Compared with the previous embodiment, this approach may avoid frequent triggering of the BSR.

**In** an embodiment, the BSR reported includes: a first type BSR associated with a first logical channel;
the first type BSR is triggered and reported by the UE in response to at least one logical channel having the uplink data with an urgent scheduling requirement and the first logical channel being a logical channel with a highest priority among the at least one logical channel, where a priority of the first type BSR is higher than a priority of a second type BSR.

**The** first type BSR is different from the second type BSR.

Here, the second type BSR may be a BSR used in the related art, in the related art, the BSRs may have different priorities. The first type BSR in the embodiments of the present disclosure has a priority higher than any priority of the BSR used in the related art. For example, the second type BSR may be a BSR used when the logical channel has the highest priority, whereas the first type BSR in the embodiments of the present disclosure has a priority higher than such a highest priority. The first type BSR may be a BSR of a logical channel for the uplink data with the urgent scheduling requirement.

In a possible implementation, logical channels or logical channel groups of the uplink data with the urgent scheduling requirement may be prioritized, and the first type BSR is reported for the logical channel or logical channel group with a high priority.

In a possible implementation, a priority of the first type BSR is higher than a priority of the second type BSR.

The first type BSR may be an XR-BSR, also referred to as a priority BSR, which is used for prioritized transmission of the logical channel or logical channel group having the data with a relatively high urgent scheduling requirement.

In a possible implementation, if the UE determines that there is data with a relatively high urgent scheduling requirement, the logical channels or logical channel groups to which such logical channel belongs are prioritized to form a priority BSR. If the grant is limited, i.e., insufficient to transmit all sorted LCGs, the priority BSR may transmit as many sorted LCGs as possible.

For example,
1> if a delay threshold (PdbThres) for a remaining data packet delay budget is configured, and the remaining data packet delay budget of the uplink data included in any logical channel of an LCG is less than PdbThres, then,
2> the priority of the LCG is increased, i.e., the LCG that is about to reach the scheduling budget threshold is prioritized.
2> if the UL grant cannot accommodate an SL-BSR MAC CE containing the buffer status only for all prioritized LCGs,

an XR-BSR is reported, where the XR-BSR contains the buffer status for as many prioritized LCGs having data available for transmission as possible, taking the number of bits in the UL grant into consideration (i.e., the new BSR carries the prioritized LCG).

Prioritized BSR,when logical channels are priorized f: the priority level for an XR-BSR type BRS or a priority BSR may be defined before the MAC CE for (Extended) BSR. For example, the logical channels should be prioritized according to the following order (with the highest priority listed first):
MAC CE for C-RNTI or data from UL-CCCH;
MAC CE for (Enhanced) BFR, or MAC CE for Configured Grant Confirmation, or MAC CE for Multiple Entry Configured Grant Confirmation;
MAC CE for Sidelink Configured Grant Confirmation;
MAC CE for LBT failure;
MAC CE for Timing Advance Report;
MAC CE for XR-BSR;
MAC CE for SL-BSR prioritized according to clause 5.22.1.6;
MAC CE for (Extended) BSR, with exception of BSR included for padding;
MAC CE for (Enhanced) Single Entry PHR, or MAC CE for (Enhanced) Multiple Entry PHR;
MAC CE for Positioning Measurement Gap Activation/Deactivation Request;
MAC CE for the number de of Desired Guard Symbols;
MAC CE for Case-6 Timing Request;
MAC CE for (Extended) Pre-emptive BSR;
MAC CE for SL-BSR, with exception of SL-BSR prioritized according to clause 5.22.1.6 and SL-BSR included for padding;
MAC CE for IAB-MT Recommended Beam Indication, or MAC CE for Desired IAB-MT PSD range, or MAC CE for Desired DL Tx Power Adjustment;
data from any Logical Channel, except data from UL-CCCH;
MAC CE for Recommended bit rate query;
MAC CE for BSR included for padding;
MAC CE for SL-BSR included for padding.

In an embodiment,
the UE determines that a logical channel has a first highest priority in response to the logical channel having the uplink data with the urgent scheduling requirement, and the BSR is reported by the UE based on the first highest priority, where the first highest priority is higher than a second highest priority.

Here, the second highest priority may be the highest priority of logical channels in the related art. In the related art, logical channels may be categorized into different priority levels, and the second highest priority may be the highest priority among all priority levels in the related art. Meanwhile, the first highest priority in the embodiments of the present disclosure is higher than the highest priority in the related art (i.e., the second highest priority). In this case, the logical channel having the uplink data with the urgent scheduling requirement may be determined as having the first highest priority. The UE may report the BSR based on the priority level.

Since the first highest priority is higher than the second highest priority, the logical channel having the uplink data with the urgent scheduling requirement has a higher priority level for reporting the BSR, thereby enabling timely scheduling of the uplink data with the urgent scheduling requirement and meeting the data transmission requirement.

For example, a super priority may be introduced for logical channels having the uplink data with the urgent scheduling requirement, which is higher than the highest priority. The UE determines that the logical channel having the uplink data with the urgent scheduling requirement is at a level higher than that of high-priority logical channels.

For example, when a regular BSR is triggered, if the data with a relatively high urgent scheduling requirement arrives at a certain logical channel, the priority level of the logical channel of this type of data is higher than that of any logical channel in any LCG. In this case, a regular BSR is triggered for the LCG corresponding to the logical channel. Thus, if the uplink data with the relatively high urgent scheduling requirement arrives at a certain logical channel, a regular BSR may be triggered.

For example, when a padding BSR is to be reported in a truncated manner, the UE determines that if there is the data with the relatively high urgent scheduling requirement, the LCG ID for the logical channel is carried in a short truncated BSR for reporting (because the logical channel is at a super high priority level); for a long truncated BSR, since multiple LCG information may be carried, the LCG ID of the logical channel that has the uplink data with the relatively high urgent scheduling requirement is placed at the front. Thus, for a certain logical channel, if a logical channel has the uplink data with a relatively high urgent scheduling requirement arrived and the grant is insufficient, requiring the reporting of the truncated BSR, the prioritized reporting of the LCG corresponding to the logical channel may be triggered.

For example, when a BSR retransmission timer times out, the UE prioritizes the transmission of the retransmission BSR scenario triggered by the data with the relatively high urgent scheduling requirement (because the logical channel is at a super high priority level). For instance, if both LCH1 and LCG2 trigger a BSR retransmission report, both LCH1 and LCG2 are considered the highest-priority logical channels, but since LCH2 has the uplink data with the urgent scheduling requirement that triggers a BSR retransmission, the BSR carrying the LCG of LCH2 is also prioritized for reporting. Thus, for a certain logical channel, if data with a relatively high urgent scheduling requirement triggers a BSR retransmission, the prioritized reporting of the LCG corresponding to the logical channel may be triggered.

To further illustrate any embodiment of the present disclosure, a specific embodiment is provided below.
1. A solution for reporting a BSR for specific data.
   a) The specific data refers to data (uplink data) with a relatively high urgent scheduling requirement (with an urgent scheduling requirement) in an XR service.
      The data with the urgent scheduling requirement may also be data that needs to be prioritized for scheduling; or may be data that the network or the terminal considers that it needs to be sent in a timely manner.
      The data with the urgent scheduling requirement may also be extended to other service characteristics of specific data, such as importance. For example, I-frame data is more important than P-frame data and needs to be sent in a timely manner.
2. The UE (e.g., a terminal) determines the data with a relatively high urgent scheduling requirement based on the following mechanisms:
   a) as an embodiment: the access layer acquires, from the Non-Access Stratum or the application layer, specific data that is the data with a relatively high urgent scheduling requirement in an XR service.
   b) As an embodiment: the access layer acquires, from the Non-Access Stratum or the application layer, specific data that is relatively important in the XR service and needs to be prioritized for transmission.
   c) As an embodiment: the access layer acquires, from the Non-Access Stratum or the application layer, specific data that is data with a relatively high urgent scheduling requirement in an XR service,which may be based on an implicit indication from the Non-Access Stratum or the application layer, such as I-frame data.
   d) As an embodiment: the remaining data packet delay budget (the time left until exceeding the PDB) is less than a certain threshold (e.g., determining that the remaining data packet delay budget of the data packet is less than 10 ms; the threshold may be specified by a protocol agreement or acquired from a network notification). The configuration granularity of the data packet delay budget (PDB) may be configured at a granularity that is either for a single data packet or for a data packet set.
      That is, the terminal may estimate which data packets has a PDB that is about to expire and has not yet been scheduled, and thus need to be prioritized for scheduling.
   **e)** The uplink data with a relatively high urgent scheduling requirement may be statistically analyzed based on statistical analysis at the data packet level or at the data packet set level.
**3.** Approach 1: the UE first identifies specific data (such as data with the urgent scheduling requirement) and temporarily sets the logical channel of the specific data to the highest priority level.
   **a)** As an embodiment: when a regular BSR is triggered, the priority level of this type of logical channel needs to be considered as the highest priority level of the logical channel. (For example, if LCH1 has uplink data to be transmitted and LCH2 has newly arrived data, even if the LCH2 has a lower logical channel priority level, since the data with the urgent scheduling requirement has arrived, the priority level of the LCH2 is higher than that of the LCH1. The regular BSR may also be triggered for LCH2.)
      The advantage of this approach is that it allows the logical channel of the data with the urgent scheduling requirement to trigger the BSR in a timely manner.
   **b)** As an embodiment: when a padding BSR is reported, if a short truncated BSR needs to be reported, the priority level of this type of the logical channel needs to be considered as the highest priority level of the logical channel. (For example, if LCH1 has data to be transmitted and LCH2 has data to be transmitted, even if the LCH2 has a lower logical channel priority level, since data with an urgent scheduling requirement has arrived, its priority level is higher than that of the LCH1. In this case, since the short truncated BSR may only carry one LCG, the short truncated BSR carries the LCG of the LCH2.)
   **c)** As an embodiment: when a BSR retransmission timer times out, the logical channel of data with a relatively high urgent scheduling requirement needs to be set as the highest priority level. (For example, if LCH1 triggers the reporting of a BSR, when the retransmission timer times out, LCH1 is considered the logical channel with the highest priority, even if LCH2 has a lower logical channel priority level, since the data with an urgent scheduling requirement has arrived, LCH2 is considered as the highest priority level.).
**4.** Approach 2: the UE triggers a regular BSR upon the arrival of data with a relatively high urgent scheduling requirement.
   **a)** As an embodiment: the conventional triggering condition for a regular BSR is modified by adding one triggering condition: the logical channel having data with an urgent scheduling requirement.
      For example, the BSR should be triggered if any of the following events occurs in an activated cell group:
      uplink data of a logical channel belonging to a logical channel group (LCG) is available to a MAC entity; and
      1) the uplink data belongs to a logical channel of which priority is higher than a priority of any logical channel that has uplink data in the logical channel group; or
      **2)** all logical channels belonging to the logical channel group do not include any available uplink data; or
      **3)** available data arriving at a logical channel belonging to the logical channel group becomes data with an urgent scheduling requirement, i.e., data that needs to be scheduled as soon as possible or has a stringent delay budget.

Here, the BSR may be a regular BSR.

**That** is, (A BSR shall be triggered if any of the following events occur for activated cell group:
- UL data, for a logical channel which belongs to an LCG, becomes available to the MAC entity; and either
   - this UL data belongs to a logical channel with higher priority than the priority of any logical channel containing available UL data which belong to any LCG; or
   - none of the logical channels which belong to an LCG contains any available UL data; or
   - UL data, for a logical channel which belongs to an LCG, becomes available data which has to be scheduled as soon as possible or has stringent delay buget;
in which case the BSR is referred below to as 'Regular BSR';)

**As** an embodiment, a conventional triggering condition for the regular BSR in the related art is modified, and one triggering condition is added: the BSR is triggered when the logical channel has the urgent scheduling data requirement. That is, the presence of data with the urgent scheduling requirement triggers the BSR.

**As** an embodiment, a conventional triggering condition for the regular BSR in the related art is modified, and one triggering condition is added: the BSR is triggered when the data with the urgent scheduling requirement in the logical channel changes from absent to present. Compared with the previous embodiment, this approach may avoid frequent triggering of the BSR.

**5.** Approach 3: a new type of BSR is defined, such as an XR-BSR, also referred to as a priority BSR, the BSR is used for prioritized transmission of the logical channel or logical channel group having the data with a relatively high urgent scheduling requirement.

As an embodiment, if the UE determines that there is data with a relatively high urgent scheduling requirement, the logical channels or logical channel groups to which such logical channel belongs are prioritized to form a priority BSR. If the grant is limited, i.e., insufficient to transmit all sorted LCGs, the priority BSR may transmit as many sorted LCGs as possible.

### Example 1:

An embodiment of prioritized transmission XR in Approach 3 is as follows:
1> if a remaining data packet delay budget threshold (delay threshold) is configured, and the remaining data packet delay budget of the uplink data included in any logical channel of an LCG is less than the remaining data packet delay budget threshold (i.e., the data packet delay budget is about to be exhausted), then,
2> the priority of the LCG is increased, i.e., the LCG that is about to reach the scheduling budget threshold is prioritized.
2> if the UL grant cannot accommodate an SL-BSR MAC CE containing the buffer status only for all prioritized LCGs,
an XR-BSR or a priority BSR is reported, where the XR-BSR contains the buffer status for as many prioritized LCGs having data available for transmission as possible, taking the number of bits in the UL grant into consideration (i.e., the new BSR carries the prioritized LCG). That is(
   1> if PdbThres is configured and the value of the logical channels that belong to any LCG and contain UL data of which remaining delay budget is less than PdbThres according to clause 5.4.5:
      2> prioritize the LCG(s)
   2> if the UL grant cannot accommodate an SL-BSR MAC CE containing buffer status only for all prioritized LCG:
   report XR-BSR containing buffer status for as many prioritized LCGs having data available for transmission as possible, taking the number of bits in the UL grant into consideration.)

Example 2: prioritized BSR,when logical channels are priorized f: the priority level for an XR-BSR type BRS or a priority BSR may be defined before the MAC CE for (Extended) BSR. The following provides an embodiment.

For example, the logical channels should be prioritized according to the following order (with the highest priority listed first):
MAC CE for C-RNTI or data from UL-CCCH;
MAC CE for (Enhanced) BFR, or MAC CE for Configured Grant Confirmation, or MAC CE for Multiple Entry Configured Grant Confirmation;
MAC CE for Sidelink Configured Grant Confirmation;
MAC CE for LBT failure;
MAC CE for Timing Advance Report;
MAC CE for XR-BSR or priority BSR;
MAC CE for SL-BSR prioritized according to clause 5.22.1.6;
MAC CE for (Extended) BSR, with exception of BSR included for padding;
MAC CE for (Enhanced) Single Entry PHR, or MAC CE for (Enhanced) Multiple Entry PHR;
MAC CE for Positioning Measurement Gap Activation/Deactivation Request;
MAC CE for the number de of Desired Guard Symbols;
MAC CE for Case-6 Timing Request;
MAC CE for (Extended) Pre-emptive BSR;
MAC CE for SL-BSR, with exception of SL-BSR prioritized according to clause 5.22.1.6 and SL-BSR included for padding;
MAC CE for IAB-MT Recommended Beam Indication, or MAC CE for Desired IAB-MT PSD range, or MAC CE for Desired DL Tx Power Adjustment;
data from any Logical Channel, except data from UL-CCCH;
MAC CE for Recommended bit rate query;
MAC CE for BSR included for padding;
MAC CE for SL-BSR included for padding.

6. Approach 4: a super priority (i.e., the first highest priority) may be introduced for logical channels having the uplink data with the urgent scheduling requirement, which has a level higher than the highest priority level (i.e., the second highest priority); and the UE determines that the logical channel having the data with the relatively urgent scheduling requirement is at a level higher than that of high-priority logical channels.
a) As an example, when a regular BSR is triggered, if the data with a relatively high urgent scheduling requirement arrives at a certain logical channel, the priority level of the logical channel of this type of data is higher than that of any logical channel in any LCG. In this case, a regular BSR is triggered for the LCG corresponding to the logical channel.
   In the above embodiment, it may ensure that, if the uplink data with the relatively high urgent scheduling requirement arrives at a certain logical channel, a regular BSR may be triggered.
b) As an example, when a padding BSR is to be reported in a truncated manner, the UE determines that if there is the data with the relatively high urgent scheduling requirement, the LCG ID for the logical channel is carried in a short truncated BSR for reporting (because the logical channel is at a super high priority level); for a long truncated BSR, since multiple LCG information may be carried, the LCG ID of the logical channel that has the uplink data with the relatively high urgent scheduling requirement is placed at the front.
   **In** the above embodiment, it may ensure that, for a certain logical channel, if a logical channel has the uplink data with a relatively high urgent scheduling requirement arrived and the grant is insufficient, requiring the reporting of the truncated BSR, the prioritized reporting of the LCG corresponding to the logical channel may be triggered.
**c)** As an example, when a BSR retransmission timer times out, the UE prioritizes the transmission of the retransmission BSR scenario triggered by the data with the relatively high urgent scheduling requirement (because the logical channel is at a super high priority level). For instance, if both LCH1 and LCG2 trigger a BSR retransmission report, both LCH1 and LCG2 are considered the highest-priority logical channels, but since LCH2 has the uplink data with the urgent scheduling requirement that triggers a BSR retransmission, the BSR carrying the LCG of LCH2 is also prioritized for reporting.

**In** the above embodiment, it may ensure that,for a certain logical channel, if data with a relatively high urgent scheduling requirement triggers a BSR retransmission, the prioritized reporting of the LCG corresponding to the logical channel may be triggered.

7. The base station enables this characteristics for the UE by notifying the UE through a dedicated signaling (second indication information).
**a)** Approach A: the notification granularity may be per UE granularity.
   **As** an embodiment: if the base station is aware that the UE is the UE performing an XR service, this function is enabled.
**b)** Approach B: the notification granularity may be per LCG granularity.
   **As** an embodiment: if the base station is aware that the UE is the UE performing an XR service, the base station notifies the UE that this function is enabled for a specific LCG.
**c)** Approach C: the notification granularity may be per logical channel granularity.
   **As** an embodiment: if the base station is aware that the UE is the UE performing an XR service, the base station notifies the UE that this function is enabled for a specific logical channel.
**d)** The notification approach for enabling this function may be explicit or implicit.
   **As** an embodiment: if the network notifies a delay budget threshold for a certain logical channel, it implies that this function is enabled.

**8.** The base station may notify the UE to use this function based on the auxiliary information.

The auxiliary information of the UE includes whether the UE supports the capability to use this function.

**The** auxiliary information of the UE includes whether the UE desires to use this function (e.g., if the UE estimates that the data has a relatively high urgent scheduling requirement, the UE reports the auxiliary information indicating the desire to use the function).

**As** shown in FIG. 12, the present disclosure provides an apparatus for reporting a buffer status report 100, provided in the UE and includes:
**a** transceiver module 110, configured to report the buffer status report BSR for uplink data with an urgent scheduling requirement.

**In** an embodiment, the transceiver module 110 is specifically configured to:
determine that a logical channel corresponding to the uplink data with the urgent scheduling requirement has a highest priority, and report the BSR based on a priority of the logical channel.

**In** an embodiment, the transceiver module 110 is specifically configured to:
trigger and report the BSR of a logical channel in response to the logical channel having the uplink data with the urgent scheduling requirement.

**In** an embodiment, the transceiver module 110 is specifically configured to:
trigger a first type BSR of a first logical channel in response to at least one logical channel having the uplink data with the urgent scheduling requirement, where a priority of the first type BSR is higher than a priority of a second type BSR, and the first logical channel is a logical channel with a highest priority among the at least one logical channel.

In an embodiment, the transceiver module 110 is specifically configured to:
determine that a logical channel has a first highest priority in response to the logical channel having the uplink data with the urgent scheduling requirement, and report the BSR based on the first highest priority, where the first highest priority is higher than a second highest priority.

**In** an embodiment, the uplink data includes: uplink data of an Extended Reality XR service.

**In** an embodiment, the uplink data with the urgent scheduling requirement includes uplink data of which a remaining data packet delay budget is less than a delay threshold.

**In** an embodiment, a configuration granularity of the delay threshold includes one of the following:
a UE granularity;
a logical channel granularity; or
a logical channel group granularity.

In an embodiment, the uplink data with the urgent scheduling requirement is a data packet granularity;
or,
the uplink data with the urgent scheduling requirement is at a data packet set granularity.

In an embodiment, the apparatus further includes:
a processing module 120, configured to determine that the uplink data has the urgent scheduling requirement according to a first indication information acquired from a Non-Access Stratum or an Application Layer.

In an embodiment, the transceiver module is specifically configured to:
report the BSR for the uplink data with the urgent scheduling requirement according to an indication of second indication information sent by a base station.

In an embodiment, the second indication information includes a delay threshold associated with a remaining data packet delay budget of the uplink data.

In an embodiment, the transceiver module 110 is specifically configured to one of the following:
report the BSR for the uplink data with the urgent scheduling requirement of the UE according to the indication of the second indication information;
report the BSR for the uplink data with the urgent scheduling requirement of a predetermined logical channel according to the indication of the second indication information; or
report the BSR for the uplink data with the urgent scheduling requirement of a predetermined logical channel group according to the indication of the second indication information.

In an embodiment, the transceiver module 110 is further configured to:
send auxiliary information to a base station, wherein the auxiliary information is configurd to indicate that the UE is capable of reporting the BSR for the uplink data with the urgent scheduling requirement.

As shown in FIG. 13, the present disclosure provides an apparatus for reporting a buffer status report 200, provided in a base station and includes:
a transceiver module 210, configured to receive a buffer status report BSR, where the BSR is sent by the user equipment UE for uplink data with an urgent scheduling requirement.

**In** an embodiment, a logical channel corresponding to the uplink data with the urgent scheduling requirement has a highest priority, and the BSR is reported by the UE based on a priority of the logical channel.

**In** an embodiment, the BSR is triggered and reported by the UE in response to a logical channel having the uplink data with the urgent scheduling requirement.

**In** an embodiment, the reported BSR includes: a first type BSR associated with a first logical channel;
the first type BSR is triggered and reported by the UE in response to at least one logical channel having the uplink data with an urgent scheduling requirement and the first logical channel being a logical channel with a highest priority among the at least one logical channel, wherein a priority of the first type BSR is higher than a priority of a second type BSR

**In** an embodiment, the UE determines that a logical channel has a first highest priority in response to the logical channel having the uplink data with the urgent scheduling requirement, and the BSR is reported by the UE based on the first highest priority, where the first highest priority is higher than a second highest priority.

**In** an embodiment, the uplink data includes: uplink data of an Extended Reality XR service.

**In** an embodiment, the uplink data with the urgent scheduling requirement includes uplink data of which a remaining data packet delay budget is less than a delay threshold.

**In** an embodiment, a configuration granularity of the delay threshold includes one of the following:
**a** UE granularity;
**a** logical channel granularity; or
**a** logical channel group granularity.

**In** an embodiment, the uplink data with the urgent scheduling requirement is at a data packet granularity;
**or**
the uplink data with the urgent scheduling requirement is at a data packet set granularity.

**In** an embodiment, the transceiver module 210 is further configured to:
send second indication information to the UE, where the second indication information is configured to indicate that the UE reports the BSR for the uplink data with the urgent scheduling requirement.

**In** an embodiment, the second indication information includes a delay threshold associated with a remaining data packet delay budget of the uplink data.

In an embodiment, the second indication information is configured to indicate one of the following:
report the BSR for the uplink data with the urgent scheduling requirement of the UE;
report the BSR for the uplink data with the urgent scheduling requirement of a predetermined logical channel; or
report the BSR for the uplink data with the urgent scheduling requirement of a predetermined logical channel group.

In an embodiment, the transceiver module 210 is specifically configured to:
send the second indication information to the UE in response to receiving auxiliary information sent by the UE, where the auxiliary information is configurd to indicate that the UE is capable of reporting the BSR for the uplink data with the urgent scheduling requirement.

The embodiments of the present disclosure provides a communication device including:
a processor;
a memory for storing executable instructions of the processor;
where the processor is configured to, when executing the executable instructions, implement the method for reporting the buffer status report according to any one of embodiments of the present disclosure.

In an embodiment, the communication device may include but is not limited to at least one of: a UE and a network device. Here, the network device may include a core network device or an access network device, etc. Here, the access network device may include a base station; the core network device may include an AMF, an SMF.

The processor may include various types of storage mediums. The storage medium is a non-transitory computer storage medium, and may continue memorizing and storing information thereon when a communication device is powered off.

The processor is connected to a memory via a bus, and may be configured to read an executable program stored on the memory, for example, at least one of the methods shown in FIGS. 2 to 11.

A computer storage medium storing a computer executable program is further provided according to embodiments of the present disclosure. When the executable program is executed by a processor, the method for reporting a buffer status report as described in the above any embodiment is implemented, for example, at least one of the methods shown in FIGS. 2 to 11.

With regards to the device or the storage medium in the above embodiments, the specific way in which each module performs the operation has been described in method embodiments and will not be elaborated here.

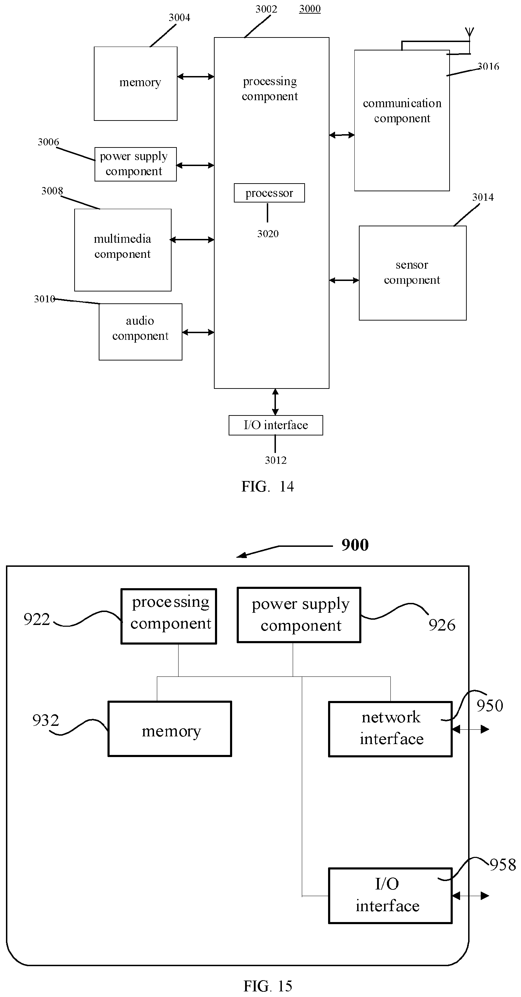

As illustrated in FIG. 14, a block diagram illustrating a user equipment (UE) 3000 is provided according to an example embodiment. For example, the user equipment 3000 may be a mobile phone, a computer, a digital broadcasting terminal, a messaging device, a game console, a tablet device, a medical device, a fitness equipment, a personal digital assistant, etc.

As illustrated in FIG. 14, the user equipment 3000 may include one or more components: a processing component 3002, a memory 3004, a power supply component 3006, a multimedia component 3008, an audio component 3010, an input/output (I/O) interface 3012, a sensor component 3014, and a communication component 3016.

The processing component 3002 generally controls an entire operation of the user equipment 3000, such as operations related to display, phone call, data communication, camera operation and recording operation. The processing component 3002 may include one or more processors 820 to perform instructions, to complete all or part of steps of the above method. In addition, the processing component 3002 may include one or more modules for the convenience of interaction between the processing component 3002 and other components. For example, the processing unit 3002 may include a multimedia module for the convenience of interaction between the multimedia component 3008 and the processing component 3002.

The memory 3004 is configured to store all types of data to support the operation of the user equipment 3000. Examples of the data include the instructions of any applications or methods operated on the user equipment 3000, contact data, phone book data, messages, pictures, videos, etc. The memory 3004 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 3006 may provide power supply for all units of the user equipment 3000. The power supply component 3006 may include a power supply management system, one or more power supplies, and other units related to generating, managing and distributing power for the user equipment 3000.

The multimedia component 3008 includes an output interface screen provided between the user equipment 3000 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense a boundary of a touch or slide action, but also detect a duration and pressure related to the touch or slide operation. In some embodiments, the multimedia component 3008 includes a front camera and/or a rear camera. When the user equipment 3000 is in operation mode, such as shooting mode or video mode, the front camera or the rear camera may receive the external multimedia data. Every front camera and rear camera may be a fixed optical lens system or an optical lens system with focal length and optical zoom capacity.

The audio component 3010 is configured as an output and/or input signal. For example, the audio component 3010 includes a microphone (MIC). When the user equipment 3000 is in operation mode, such as call mode, record mode, and speech recognition mode, the microphone is configured to receive external audio signals. The audio signals received may be further stored in the memory 3004 or sent via the communication units 3016. In some embodiments, the audio component 3010 further includes a speaker configured to output an audio signal.

The I/O interface 3012 provides an interface for the processing component 3002 and the peripheral interface module, and the peripheral interface module may be a keyboard, a click wheel, a button, etc. The buttons may include but not limited to a home button, a volume button, a start button and a lock button.

The sensor component 3014 includes one or more sensors, configured to provide various aspects of status assessment for the user equipment 3000. For example, the sensor component 3014 may detect the on/off state of the user equipment 3000 and the relative positioning of the component. For example, the component is the display and the keypad of the user equipment 3000, the sensor component 3014 may also detect the location change of the user equipment 3000 or one component of the user equipment 3000, the presence or absence of contact between the user and the user equipment 3000, the orientation or acceleration/deceleration of the user equipment 3000, and the temperature change of the user equipment 3000. The sensor component 3014 may include a proximity sensor, which is configured to detect presence of the objects nearby without any physical contact. The sensor component 3014 may further include a light sensor such as a CMOS or CCD image sensor, which is configured to use in imaging applications. In some embodiments, the sensor units 3014 may further include an acceleration transducer, a gyroscope sensor, a magnetic sensor, a pressure sensor or a temperature sensor.

The communication component 3016 may be configured for the convenience of wired or wireless communication between the user equipment 3000 and other devices. The user equipment 3000 may access wireless networks based on a communication standard, such as Wi-Fi, 2G or 3G, or their combination. In an exemplary embodiment, the communication component 3016 receives broadcast signals or broadcast-related information from an external broadcast management system via a broadcast channel. In an example embodiment, the communication component 3016 further includes a near field communication (NFC) module to facilitate short-range communication. For example, the NFC module may be implemented based on a radio frequency identification (RFID) technology, an infrared data association (IRDA) technology, an ultra-wideband (UWB) technology, Bluetooth (BT) technology and other technologies.

**In** an example embodiment, the user equipment 3000 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

**In** an example embodiment, a non-transitory computer-readable storage medium including instructions is further provided, such as the memory 3004 including instructions, and the instructions may be executed by the processor 820 of the user equipment 3000 to complete the above method. For example, the non-transitory computer readable storage medium may be a ROM, a random-access memory (RAM), a CD-ROM, a magnetic tape, a floppy disk, an optical data storage device, etc.

FIG. 15 illustrates a structure of a base station according to an embodiment of the disclosure. For example, a base station 900 may be provided as a network side server. As illustrated in FIG. 15, the base station 900 includes a processing component 922, which further includes one or more processors, and memory resources represented by a memory 932, which are configured to store instructions executable by the processing component 922, for example, an application. The application stored in the memory 932 may include one or more modules each of which corresponds to a set of instructions. In addition, the processing component 922 is configured to execute instructions, to perform any one method applied to the base station as described in the above method.

The base station 900 may further include one power supply component 926 configured to execute power management of the base station 900, one wired or wireless network interface 950 configured to connect the base station 900 to a network, and one input/output(I/O) interface 958. The base station 900 may operate an operating system stored in the memory 932, for example, Windows Server TM, Mac OS XTM, UnixTM, LinuxTM, FreeBSDTM or similar.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A method for reporting a buffer status report, performed by a user equipment UE, comprising:
reporting the buffer status report BSR for uplink data with an urgent scheduling requirement.

2. The method according to claim 1, wherein the reporting the BSR for the uplink data with the urgent scheduling requirement comprises:
determining that a logical channel corresponding to the uplink data with the urgent scheduling requirement has a highest priority, and reporting the BSR based on a priority of the logical channel.

3. The method according to claim 1, wherein the reporting the BSR for the uplink data with the urgent scheduling requirement comprises:
triggering and reporting the BSR of a logical channel in response to the logical channel having the uplink data with the urgent scheduling requirement.

4. The method according to claim 1, wherein the reporting the BSR for the uplink data with the urgent scheduling requirement comprises:
triggering a first type BSR of a first logical channel in response to at least one logical channel having the uplink data with the urgent scheduling requirement, wherein a priority of the first type BSR is higher than a priority of a second type BSR, and the first logical channel is a logical channel with a highest priority among the at least one logical channel.

5. The method according to claim 1, wherein the reporting the BSR for the uplink data with the urgent scheduling requirement comprises:
determining that a logical channel has a first highest priority in response to the logical channel having the uplink data with the urgent scheduling requirement, and reporting the BSR based on the first highest priority, wherein the first highest priority is higher than a second highest priority.

6. The method according to any one of claims 1 to 5, wherein the uplink data comprises: uplink data of an Extended Reality XR service.

7. The method according to claim 6, wherein the uplink data with the urgent scheduling requirement comprises uplink data of which a remaining data packet delay budget is less than a delay threshold.

8. The method according to claim 7, wherein a configuration granularity of the delay threshold comprises one of following:
a UE granularity;
a logical channel granularity; or
a logical channel group granularity.

9. The method according to claim 6, wherein the uplink data with the urgent scheduling requirement is at a data packet granularity; or
the uplink data with the urgent scheduling requirement is at a data packet set granularity.

10. The method according to claim 6, further comprising:
determining that the uplink data has the urgent scheduling requirement according to a first indication information acquired from a Non-Access Stratum or an Application Layer.

11. The method according to any one of claims 1 to 5, wherein the reporting the BSR for the uplink data with the urgent scheduling requirement comprises:
reporting the BSR for the uplink data with the urgent scheduling requirement according to an indication of second indication information sent by a base station.

12. The method according to claim 11, wherein the second indication information comprises a delay threshold associated with a remaining data packet delay budget of the uplink data.

13. The method according to claim 11, wherein the reporting the BSR for the uplink data with the urgent scheduling requirement according to the indication of the second indication information sent by the base station comprises one of following:
reporting the BSR for the uplink data with the urgent scheduling requirement of the UE according to the indication of the second indication information;
reporting the BSR for the uplink data with the urgent scheduling requirement of a predetermined logical channel according to the indication of the second indication information; or
reporting the BSR for the uplink data with the urgent scheduling requirement of a predetermined logical channel group according to the indication of the second indication information.

14. The method according to any one of claims 1 to 5, further comprising:
sending auxiliary information to a base station, wherein the auxiliary information is configurd to indicate that the UE is capable of reporting the BSR for the uplink data with the urgent scheduling requirement.

15. A method for reporting a buffer status report, performed by a base station, comprising:
receiving the buffer status report BSR, wherein the BSR is sent by a user equipment UE for uplink data with an urgent scheduling requirement.

16. The method according to claim 15, wherein a logical channel corresponding to the uplink data with the urgent scheduling requirement has a highest priority, and the BSR is reported by the UE based on a priority of the logical channel.

17. The method according to claim 15, wherein the BSR is triggered and reported by the UE in response to a logical channel having the uplink data with the urgent scheduling requirement.

18. The method according to claim 15, wherein the BSR reported comprises: a first type BSR associated with a first logical channel;
wherein the first type BSR is triggered and reported by the UE in response to at least one logical channel having the uplink data with an urgent scheduling requirement and the first logical channel being a logical channel with a highest priority among the at least one logical channel, wherein a priority of the first type BSR is higher than a priority of a second type BSR.

19. The method according to claim 15, wherein the UE determines that a logical channel has a first highest priority in response to the logical channel having the uplink data with the urgent scheduling requirement, and the BSR is reported by the UE based on the first highest priority, wherein the first highest priority is higher than a second highest priority.

20. The method according to any one of claims 15 to 19, wherein the uplink data comprises: uplink data of an Extended Reality XR service.

21. The method according to claim 20, wherein,
the uplink data with the urgent scheduling requirement comprises uplink data of which a remaining data packet delay budget is less than a delay threshold.

22. The method according to claim 21, wherein a configuration granularity of the delay threshold comprises one of following:
a UE granularity;
a logical channel granularity; or
a logical channel group granularity.

23. The method according to claim 20, wherein the uplink data with the urgent scheduling requirement is at a data packet granularity; or
the uplink data with the urgent scheduling requirement is at a data packet set granularity.

24. The method according to any one of claims 15 to 19, further comprising:
sending second indication information to the UE, wherein the second indication information is configured to indicate that the UE reports the BSR for the uplink data with the urgent scheduling requirement.

25. The method according to claim 24, wherein the second indication information comprises a delay threshold associated with a remaining data packet delay budget of the uplink data.

26. The method according to claim 24, wherein the second indication information is configured to indicate one of following:
reporting the BSR for the uplink data with the urgent scheduling requirement of the UE;
reporting the BSR for the uplink data with the urgent scheduling requirement of a predetermined logical channel; or
reporting the BSR for the uplink data with the urgent scheduling requirement of a predetermined logical channel group.

27. The method according to claim 24, wherein the sending the second indication information to the UE comprises:
sending the second indication information to the UE in response to receiving auxiliary information sent by the UE, wherein the auxiliary information is configurd to indicate that the UE is capable of reporting the BSR for the uplink data with the urgent scheduling requirement.

28. An apparatus for reporting a buffer status report, provided in a user equipment (UE), comprising:
a transceiver module, configured to report the buffer status report BSR for uplink data with an urgent scheduling requirement.

29. An apparatus for reporting a buffer status report, provided in a base station, comprising:
a transceiver module, configured to receive the buffer status report BSR, wherein the BSR is sent by a user equipment UE for uplink data with an urgent scheduling requirement.

30. A communication device, comprising:
a processor;
a memory for storing executable instructions of the processor;
wherein the processor is configured to, when executing the executable instructions, implement the method for reporting the buffer status report according to any one of claims 1 to 14 or 15 to 27.

31. A computer storage medium, wherein the computer storage medium stores a computer-executable program, and the executable program, when executed by a processor, implements the method for reporting the buffer status report according to any one of claims 1 to 14 or 15 to 27.
